# EUROPÄISCHE PATENTSCHRIFT

(11) **EP 1 410 970 B1**
(45) Veröffentlichungstag und Bekanntmachung des Hinweises auf die Patenterteilung: **05.03.2008**
(21) Anmeldenummer: 03022997.5
(22) Anmeldetag: 10.10.2003
(51) Int. Cl.: B60T 13/26, B60T 13/38, B60T 15/20

(54) **Vorrichtung und Verfahren zum Belüften und Entlüften von Federspeicherzylindern sowie Feststellbremsanlage**
Device and method for the supply and venting of compressed air in spring-applied/pressure-released brakes and parking brake
Dispositif et procédé pour l'alimentation et l'évacuation d'air comprimé dans des freins à ressort à desserrage pneumatique et frein de stationnement

(30) Priorität: 14.10.2002 DE 10247812
(43) Veröffentlichungstag der Anmeldung: 21.04.2004
(73) Patentinhaber: KNORR-BREMSE SYSTEME FÜR NUTZFAHRZEUGE GMBH, 80809 München (DE)
(72) Erfinder: Hilberer, Eduard, 68766 Hockenheim (DE)

(56) Entgegenhaltungen:
- EP-A- 0 371 935
- FR-A- 2 147 076
- US-A- 4 616 881
- US-A- 4 763 959

## Beschreibung

Die Erfindung betrifft eine Ventileinrichtung und ein Verfahren zum Belüften und Entlüften von Federspeicherzylindern.

Die Erfindung betrifft weiterhin eine Feststellebremsanlage, insbesondere für Nutzfahrzeuge.

Dokument US 4 763 959 offenbart eine Feststellbremsanlage für Nutzfahrzeuge.

Feststellbremsanlagen kommen als Bremssysteme zum Einsatz, die von der Betriebsbremse des Fahrzeugs unabhängig sind. Sie dienen insbesondere zum Bremsen eines Fahrzeugs im abgestellten beziehungsweise geparkten Zustand.

Für den Betrieb einer Feststellbremsanlage sind Federspeicherzylinder vorgesehen, die für die Fahrt des Fahrzeugs belüftet werden, so dass keine Federkraft auf die Radbremszylinder aufgebracht wird. Im entlüfteten Zustand wird dann durch die Federn die Bremskraft zur Verfügung gestellt.

Um eine solche Feststellbremsanlage zu betreiben ist somit eine Ventileinrichtung zum Belüften und Entlüften von Federspeicherzylindern erforderlich, die durch pneumatische und/oder elektrische Mittel angesteuert wird.

Im Falle einer zumindest teilweise elektrischen Ansteuerung muss der Situation Rechnung getragen werden, in der es während der Fahrt zu einem Stromausfall im Fahrzeug kommt, beziehungsweise der Situation, in der elektrisch bediente Komponenten ausfallen. In jedem Fall muss verhindert werden, dass bei derartigen Defekten ein schlagartiges Einbremsen der Feststellbremsanlage erfolgt, da dies insbesondere bei hohen Fahrgeschwindigkeiten mit großen Gefahren verbunden ist.

Zu diesem Zweck gibt es beispielsweise die Möglichkeit, die Feststellbremse über eine in der Ventileinrichtung vorgesehene Drossel gedrosselt zu entlüften, so dass die Bremswirkung der Feststellbremsanlage nur langsam zunimmt. Der Fahrer hat dann im Falle eines Defektes noch die Möglichkeit, das Fahrzeug in eine sichere Position zu steuern.

Allerdings gibt es auch Bestrebungen, eine solche gedrosselte Entlüftung zu vermeiden; dann muss gewährleistet sein, dass der belüftete Zustand der Federspeicherzylinder auch bei Defekten aufrechterhalten wird.

Der Erfindung liegt die Aufgabe zugrunde, eine Vorrichtung, ein Verfahren und eine Feststellbremsanlage zur Verfügung zu stellen, die einen sicheren Betrieb gewährleisten, der auch beim Ausfall der elektrischen Stromversorgung beziehungsweise vergleichbarer Defekte aufrechterhalten wird.

Diese Aufgabe wird mit den Merkmalen der unabhängigen Ansprüche gelöst.

Vorteilhafte Ausführungsformen der Erfindung sind in den abhängigen Ansprüchen angegeben.

Ein Gesichtspunkt der Erfindung ist eine Ventileinrichtung zum Belüften und Entlüften von mindestens einem Federspeicherzylinder in einer Bremsanlage eines Nutzfahrzeugs, mit einem ersten Magnetventil, einem zweiten Magnetventil und einem 3/3-Ventil mit einem Gehäuse, mindestens drei Steuerkolben und mindestens einem Schaltkolben, wobei über das erste Magnetventil eine erste Steuerkammer eines ersten Steuerkolbens mit Druck beaufschlagt werden kann, wobei über das zweite Magnetventil eine gemeinsame zweite Steuerkammer eines zweiten Steuerkolbens und eines dritten Steuerkolbens mit Druck beaufschlagt werden kann, wobei zur Darstellung verschiedener Schaltzustände durch Druckbeaufschlagung der Steuerkammern unter Vermittlung der Steuerkolben der mindestens eine Schaltkolben verschoben werden kann, indem der erste Steuerkolben auf ein erstes Ende des Schaltkolbens wirkt und der zweite Steuerkolben sowie der dritte Steuerkolben auf ein zweites Ende des Schaltkolbens wirken, wobei die Wirkfläche des ersten Steuerkolbens grö-ßer ist als die Wirkfläche des zweiten Steuerkolbens und die Wirkfläche des ersten Steuerkolbens kleiner ist als die Summe der Wirkflächen des zweiten Steuerkolbens und des dritten Steuerkolbens, so dass bei einer negativen Druckdifferenz zwischen der ersten Steuerkammer und der zweiten Steuerkammer der Schaltkolben in eine erste Endstellung in Richtung der ersten Steuerkammer getrieben wird, bei einer positiven Druckdifferenz zwischen der ersten Steuerkammer und der zweiten Steuerkammer der Schaltkolben in eine zweite Endstellung in Richtung der zweiten Steuerkammer getrieben wird und bei gleichem Druck oberhalb Atmosphärendruck in der ersten Steuerkammer und in der zweiten Steuerkammer der Schaltkolben in eine Zwischenstellung getrieben wird, so dass über die Stellung des Schaltkolbens der Zustand des mindestens einen Federspeicherzylinders bestimmt werden kann. Auf diese Weise steht eine Ventileinrichtung zur Verfügung, die durch selektive Druckbeaufschlagung von zwei Steuerkammern ein zuverlässiges Belüften und Entlüften einer Feststellbremsanlage sicherstellen kann, wobei insbesondere durch die Bereitstellung einer Zwischenstellung des Schaltkolbens ein schlagartiges Beenden des Belüftens beziehungsweise des Entlüftens ermöglicht wird. Bei dem Einsatz elektrisch angesteuerter Magnetventile bleibt eine belüftete Feststellbremsanlage auch dann belüftet, wenn es zu einem Stromausfall kommt, so dass es insbesondere beim Betrieb der Ventileinrichtung im Rahmen einer Feststellbremsanlage im Fehlerfall nicht zu einem schlagartigen Entlüften der Federspeicherzylinder kommt.

Die erfindungsgemäße Ventileinrichtung ist insbesondere dadurch besonders vorteilhaft weitergebildet, dass der Schaltkolben mehrere Verdickungen mit Dichtmitteln aufweist, so dass Bereiche um den Schaltkolben gegen eine Gehäusewand des 3/3-Ventils abgedichtet werden können, dass in einer Gehäusewand des 3/3-Ventils eine Versorgungsöffnung, eine Arbeitsöffnung und eine Entlüftungsöffnung vorgesehen sind, dass in der ersten Endstellung die Arbeitsöffnung mit der Entlüftungsöffnung verbunden ist, dass in der zweiten Endstellung die Arbeitsöffnung mit der Versorgungsöffnung verbunden ist und dass in der Zwischenstellung die Versorgungsöffnung, die Arbeitsöffnung und die Entlüftungsöffnung gegeneinander abgedichtet sind. Die erste Endstellung des Schaltkolbens ermöglicht somit eine Entlüftung der Feststellbremsanlage. In der zweiten Endstellung wird die Feststellbremsanlage belüftet. In der Zwischenstellung sind alle Öffnungen gegeneinander abgedichtet, so dass weder ein Belüften noch ein Entlüften stattfindet.

Bei einer besonders bevorzugten Ausführungsform der erfindungsgemäßen Ventileinrichtung ist vorgesehen, dass der dritte Steuerkolben eine Durchgangsöffnung aufweist, dass der zweite Steuerkolben in der Durchgangsöffnung des dritten Steuerkolbens geführt wird, dass eine Bewegung des zweiten Steuerkolbens in Richtung der ersten Steuerkammer durch ein Anschlagen an dem Gehäuse des 3/3-Ventils begrenzt ist, dass eine Bewegung des zweiten Steuerkolbens in Richtung der zweiten Steuerkammer durch ein Anschlagen an dem dritten Steuerkolben begrenzt ist und dass eine Bewegung des dritten Steuerkolbens in Richtung der ersten Steuerkammer durch ein Anschlagen an dem Gehäuse des 3/3-Ventils begrenzt ist, wobei bei einer gemeinsamen Bewegung des zweiten Steuerkolbens und des dritten Steuerkolbens in Richtung der ersten Steuerkammer der dritte Steuerkolben vor dem zweiten Steuerkolben an dem Gehäuse des 3/3-Ventils anschlägt. Der zweite Steuerkolben kann sich also weiter in Richtung der ersten Steuerkammer bewegen als der dritte Steuerkolben. Insbesondere bedeutet dies, dass bei angeschlagenem dritten Steuerkolben an dem Gehäuse des 3/3-Ventils nur die Wirkfläche des zweiten Steuerkolbens als Gegenspieler zur Wirkfläche des ersten Steuerkolbens zur Verfügung steht. Eine Druckbeaufschlagung beider Steuerkammern mit demselben Druck führt somit dazu, dass, beispielsweise ausgehend von der ersten Endstellung des Schaltkolbens, zunächst die größere Wirkfläche des ersten Steuerkolbens eine Verschiebung des Schaltkolbens in Richtung der zweiten Steuerkammer veranlasst. Sobald jedoch der zweite Steuerkolben an dem dritten Steuerkolben anschlägt, ist die Summe der Wirkflächen des zweiten Steuerkolbens und des dritten Steuerkolbens zu berücksichtigen, so dass die aus dem Druck in der ersten Steuerkammer resultierende Kraft nicht mehr ausreicht, um den Schaltkolben weiter in Richtung der zweiten Steuerkammer zu treiben. Andererseits kann der Schaltkolben aber auch nicht zurück in Richtung der ersten Steuerkammer getrieben werden, da hierfür gemäß den Größenverhältnissen der Steuerkolben nur die kleinere Wirkfläche des zweiten Steuerkolbens zur Verfügung steht.

Es ist besonders nützlich, dass zum Umschalten zwischen den Stellungen des Schaltkolbens Druckimpulse verwendet werden und dass in Abwesenheit von Druckimpulsen der Schaltkolben in seiner Stellung verharrt. Die Magnetventile müssen daher nur kurzzeitig die Steuerkammern selektiv mit Druck beaufschlagen, um die jeweiligen Schaltvorgänge zu bewirken. Eine drucklose zweite Steuerkammer und ein Druckimpuls in der ersten Steuerkammer führt dazu, dass die erste Endstellung des Schaltkolbens eingenommen wird - es wird belüftet -, ein Druckimpuls in der zweiten Steuerkammer bei druckloser erster Steuerkammer führt dazu, dass der Schaltkolben in eine zweite Endstellung verschoben wird - es wird entlüftet - , und ein gleichzeitiger Druckimpuls in beiden Steuerkammern von gleicher Größe treibt den Schaltkolben in seine Zwischenstellung - es wird weder belüftet noch entlüftet. Durch die Reibung der Dichtmittel, die vorzugsweise als O-Ringe an Verdickungen des Schaltkolbens ausgelegt sind, verharrt das System in Abwesenheit von Druckimpulsen in seiner jeweiligen Stellung. Auch bei völligem Ausfall jeglicher Ansteuerungsmöglichkeiten der Ventileinrichtung wird somit beispielsweise sichergestellt, dass ein belüfteter Zustand der Federspeicherzylinder aufrechterhalten bleibt.

Bevorzugt ist vorgesehen, dass die Magnetventile elektrisch ansteuerbar sind und dass an der Arbeitsöffnung mindestens ein Federspeicherzylinder anschließbar ist, so dass die Ventileinrichtung im Rahmen einer elektrisch ansteuerbaren Feststellbremsanlage einsetzbar ist. Die Ventileinrichtung bietet alle Funktionen, die für einen zuverlässigen und sicheren Betrieb einer Feststellbremsanlage erforderlich sind.

Ein weiterer Gesichtspunkt der Erfindung ist insofern auch eine Feststellbremsanlage, insbesondere für Nutzfahrzeuge, mit einer erfindungsgemäßen Ventileinrichtung beziehungsweise mit einer Ventileinrichtung gemäß einer bevorzugten Ausführungsform der erfindungsgemäßen Ventileinrichtung. Dabei kommen die Vorzüge der beschriebenen Ventileinrichtung besonders gut zum Tragen.

Eine solche Feststellbremsanlage ist in besonders vorteilhafter Weise dadurch weitergebildet, dass ein elektrisches Betätigungselement vorgesehen ist, das mit einer elektronischen Steuerung für die Feststellbremsanlage kommunizieren kann, und dass die elektronische Steuerung für die Feststellbremsanlage zumindest teilweise in einer für weitere Zwecke vorgesehenen elektronischen Steuerung integriert ist. Auf diese Weise können Leitungsfunktionen, die bei rein pneumatischen Systemen auf pneumatischer Basis realisiert werden, durch elektrische Leitungsfunktionen ersetzt werden. Dies verringert den Montageaufwand und die Anzahl von benötigten Montageteilen erheblich, was zu einer deutlichen Kosteneinsparung führen kann. In diesem Zusammenhang ist es dann besonders vorteilhaft, dass die elektronische Steuerung für die Feststellbremsanlage nicht separat ausgeführt ist, wodurch wieder eine zusätzliche Komponente benötigt würde, sondern zumindest teilweise in einer für weitere Zwecke vorgesehenen elektronischen Steuerung integriert ist . Diese Integration reduziert den Aufwand und die damit verbundenen Kosten.

Die erfindungsgemäße Feststellbremsanlage ist in besonders vorteilhafter Weise dadurch weitergebildet, dass das Betätigungselement drei Einstellmöglichkeiten aufweist, wobei in einer Fahrstellung alle beteiligten Federspeicherzylinder belüftet werden, in einer Stoppstellung alle beteiligten Federspeicherzylinder entlüftet werden und in einer Kontrollstellung eine erste Gruppe von Federspeicherzylindern entlüftet wird beziehungsweise ist und eine zweite Gruppe von Federspeicherzylindern belüftet wird. In einer Fahrstellung wird durch das Belüften aller beteiligter Federspeicherzylinder also die Bremswirkung aufgehoben, während durch das Entlüften in der Stoppstellung eine Bremswirkung erzielt wird. Um nun zu prüfen, ob eine ausgewählte Gruppe von Federspeicherzylindern in der Lage ist, eine erforderliche Bremswirkung allein aufzubringen, ist es möglich, eine Kontrollstellung einzustellen, in der eine Gruppe von anderen Federspeicherzylindern belüftet wird.

In diesem Zusammenhang ist es von besonderem Vorteil, dass die erste Gruppe von Federspeicherzylindern einem Zugfahrzeug eines Nutzkraftfahrzeugs zugeordnet ist und dass die zweite Gruppe von Federspeicherzylindern mindestens einem Anhänger eines Nutzkraftfahrzeugs zugeordnet ist. Die zweite Gruppe von Federspeicherzylindern kann also in der Kontrollstellung belüftet werden, so dass geprüft werden kann, ob die erforderliche Bremswirkung von den Bremsen des Zugfahrzeugs allein aufgebracht werden kann.

Die erfindungsgemäße Feststellbremsanlage ist in besonders nützlicher Weise dadurch weitergebildet, dass die elektronische Steuerung für die Feststellbremsanlage zumindest teilweise in einem Bordrechner, einem Fahrzeugführungsrechner, in einer Steuerung für ein elektronisches Bremssystem (EBS) und/oder in einer Steuerung einer elektronischen Luftaufbereitungsanlage mit Kreisschutzeinrichtung (EAC) integriert ist. Damit stehen zahlreiche den Aufwand reduzierende integrierende Maßnahmen zur Verfügung, wobei die Integration der Steuerung in einer elektronischen Luftaufbereitungsanlage mit Kreisschutzeinrichtung als besonders nützlich erachtet wird.

Die Erfindung betrifft weiterhin ein Verfahren zum Belüften und Entlüften von mindestens einem Federspeicherzylinder in einer Bremsanlage eines Nutzfahrzeugs, bei dem ein erstes Magnetventil, ein zweites Magnetventil und ein 3/3-Ventil mit einem Gehäuse, mindestens drei Steuerkolben und mindestens einem Schaltkolben verwendet werden, wobei über das erste Magnetventil eine erste Steuerkammer eines ersten Steuerkolbens mit Druck beaufschlagt werden kann, wobei über das zweite Magnetventil eine gemeinsame zweite Steuerkammer eines zweiten Steuerkolbens und eines dritten Steuerkolbens mit Druck beaufschlagt werden kann, wobei zur Darstellung verschiedener Schaltzustände durch Druckbeaufschlagung der Steuerkammern unter Vermittlung der Steuerkolben der mindestens eine Schaltkolben verschoben werden kann, indem der erste Steuerkolben auf ein erstes Ende des Schaltkolbens wirkt und der zweite Steuerkolben sowie der dritte Steuerkolben auf ein zweites Ende des Schaltkolbens wirken, wobei die Wirkfläche des ersten Steuerkolbens größer ist als die Wirkfläche des zweiten Steuerkolbens und die Wirkfläche des ersten Steuerkolbens kleiner ist als die Summe der Wirkflächen des zweiten Steuerkolbens und des dritten Steuerkolbens, so dass bei einer negativen Druckdifferenz zwischen der ersten Steuerkammer und der zweiten Steuerkammer der Schaltkolben in eine erste Endstellung in Richtung der ersten Steuerkammer getrieben wird, bei einer positiven Druckdifferenz zwischen der ersten Steuerkammer und der zweiten Steuerkammer der Schaltkolben in eine zweite Endstellung in Richtung der zweiten Steuerkammer getrieben wird und bei gleichem Druck oberhalb Atmosphärendruck in der ersten Steuerkammer und in der zweiten Steuerkammer der Schaltkolben in eine Zwischenstellung getrieben wird, so dass über die Stellung des Schaltkolbens der Zustand des mindestens einen Federspeicherzylinders bestimmt werden kann. Auf diese Weise werden die Besonderheiten und Vorteile der erfindungsgemäßen Ventileinrichtung beziehungsweise der erfindungsgemäßen Feststellbremsanlage auch im Rahmen eines Verfahrens umgesetzt. Dies gilt auch für die nachfolgend angegebenen besonders bevorzugten Ausführungsformen des erfindungsgemäßen Verfahrens.

Das erfindungsgemäße Verfahren ist insbesondere dadurch besonders vorteilhaft weitergebildet, dass der Schaltkolben mehrere Verdickungen mit Dichtmitteln aufweist, so dass Bereiche um den Schaltkolben gegen eine Gehäusewand des 3/3-Ventils abgedichtet werden, dass in einer Gehäusewand des 3/3-Ventils eine Versorgungsöffnung, eine Arbeitsöffnung und eine Entlüftungsöffnung vorgesehen sind, dass in der ersten Endstellung die Arbeitsöffnung mit der Entlüftungsöffnung verbunden ist, dass in der zweiten Endstellung die Arbeitsöffnung mit der Versorgungsöffnung verbunden ist und dass in der Zwischenstellung die Versorgungsöffnung, die Arbeitsöffnung und die Entlüftungsöffnung gegeneinander abgedichtet sind.

Bei einer besonders bevorzugten Ausführungsform des erfindungsgemäßen Verfahrens ist vorgesehen, dass der dritte Steuerkolben eine Durchgangsöffnung aufweist, dass der zweite Steuerkolben in der Durchgangsöffnung des dritten Steuerkolbens geführt wird, dass eine Bewegung des zweiten Steuerkolbens in Richtung der ersten Steuerkammer durch ein Anschlagen an dem Gehäuse des 3/3-Ventils begrenzt wird und dass eine Bewegung des zweiten Steuerkolbens in Richtung der zweiten Steuerkammer durch ein Anschlagen an dem dritten Steuerkolben begrenzt wird, wobei bei einer gemeinsamen Bewegung des zweiten Steuerkolbens und des dritten Steuerkolbens in Richtung der ersten Steuerkammer der dritte Steuerkolben vor dem zweiten Steuerkolben an dem Gehäuse des 3/3-Ventils anschlägt.

Es ist besonders nützlich, dass zum Umschalten zwischen den Stellungen des Schaltkolbens Druckimpulse verwendet werden und dass in Abwesenheit von Druckimpulsen der Schaltkolben in seiner Stellung verharrt.

Weiterhin ist bei dem erfindungsgemäßen Verfahren besonders bevorzugt, dass die Magnetventile elektrisch angesteuert werden und dass an der Arbeitsöffnung mindestens ein Federspeicherzylinder anschließbar ist, so dass das Verfahren im Rahmen einer elektrisch ansteuerbaren Feststellbremsanlage verwendbar ist.

Das erfindungsgemäße Verfahren ist in besonders vorteilhafter Weise dadurch weitergebildet, dass ein elektrisches Betätigungselement vorgesehen ist, das mit einer elektronischen Steuerung für die Feststellbremsanlage kommuniziert, und dass die elektronische Steuerung für die Feststellbremsanlage zumindest teilweise in einer für weitere Zwecke vorgesehenen elektronischen Steuerung integriert ist.

Weiterhin ist es nützlich, dass das Betätigungselement drei Einstellmöglichkeiten aufweist, wobei in einer Fahrstellung alle beteiligten Federspeicherzylinder belüftet werden, in einer Stoppstellung alle beteiligten Federspeicherzylinder entlüftet werden und in einer Kontrollstellung eine erste Gruppe von Federspeicherzylindern entlüftet wird beziehungsweise ist und eine zweite Gruppe von Federspeicherzylindern belüftet wird.

In diesem Zusammenhang ist es von besonderem Vorteil, dass die erste Gruppe von Federspeicherzylindern einem Zugfahrzeug eines Nutzkraftfahrzeugs zugeordnet ist und dass die zweite Gruppe von Federspeicherzylindern mindestens einem Anhänger eines Nutzkraftfahrzeugs zugeordnet ist.

Weiterhin ist bei dem erfindungsgemäßen Verfahren besonders bevorzugt, dass die elektronische Steuerung für die Feststellbremsanlage zumindest teilweise in einem Bordrechner, einem Fahrzeugführungsrechner, in einer Steuerung für ein elektronisches Bremssystem (EBS) und/oder in einer Steuerung einer elektronischen Luftaufbereitungsanlage mit Kreisschutzeinrichtung (EAC) integriert ist.

Der Erfindung liegt die Erkenntnis zugrunde, dass eine sichere und zuverlässig arbeitende Ventileinrichtung insbesondere im Zusammenhang mit einer Feststellbremsanlage dadurch zur Verfügung gestellt werden kann, dass die Wirkflächen von teilweise miteinander zusammenwirkenden Steuerkolben entsprechend gewählt werden. Die Feststellbremsanlage behält auch im Fehlerfall ihren jeweiligen Zustand bei, und sie kann ferner in eine Einstellung gebracht werden, in der Entlüftungs- und Belüftungsvorgänge unterbunden werden. Das Verharren in den jeweiligen Stellungen wird durch die Reibungskraft erreicht, die zwischen Dichtmitteln und dem Ventilgehäuse wirkt, wobei insbesondere keine weiteren Maßnahmen zum Aufrechterhalten einer bestimmten Stellung erforderlich sind. Dies schafft ein besonders einfaches und damit kostengünstiges System.

Die Erfindung wird nun mit Bezug auf die begleitenden Zeichnungen anhand besonders bevorzugter Ausführungsformen beispielhaft erläutert.

Dabei zeigt:
- Figur 1: eine erfindungsgemäße Ventileinrichtung und deren Einbindung in eine erfindungsgemäße Feststellbremsanlage;
- Figur 2: eine erfindungsgemäße Ventileinrichtung in einem Belüftungszustand;
- Figur 3: ein Spannungs-Zeit-Diagramm zur Erläuterung der Ansteuerung der erfindungsgemäßen Ventileinrichtung gemäß Figur 2;
- Figur 4: eine erfindungsgemäße Ventileinrichtung in einem Entlüftungszustand;
- Figur 5: ein Spannungs-Zeit-Diagramm zur Erläuterung der Ansteuerung der erfindungsgemäßen Ventileinrichtung gemäß Figur 4;
- Figur 6: eine erfindungsgemäße Ventileinrichtung in einer Zwischenstellung;
- Figur 7: ein Spannungs-Zeit-Diagramm zur Erläuterung der Ansteuerung der erfindungsgemäßen Ventileinrichtung gemäß Figur 6.

Bei der nachfolgenden detaillierten Beschreibung der Zeichnungen bezeichnen gleiche Bezugszeichen gleiche oder vergleichbare Komponenten.

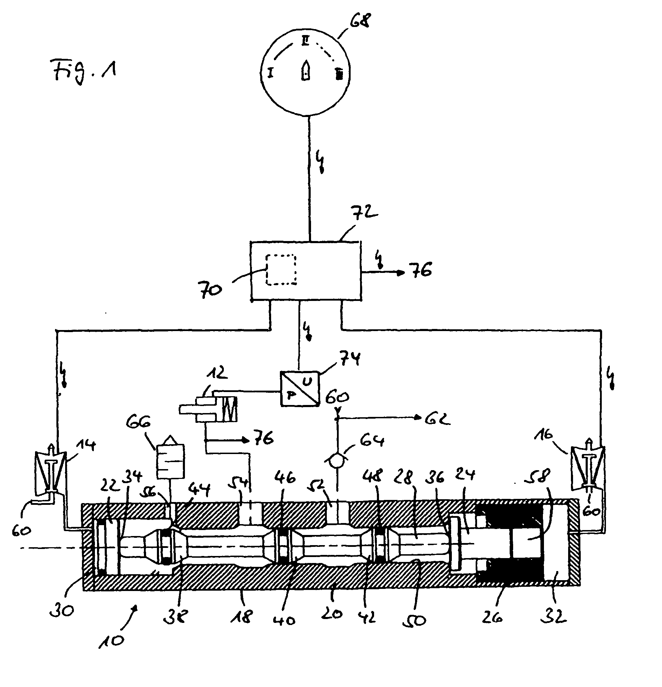

Figur 1 zeigt eine erfindungsgemäße Ventileinrichtung 10 und deren Einbindung in eine erfindungsgemäße Feststellbremsanlage.

Eine erfindungsgemäße Ventileinrichtung 10 umfasst ein erstes Magnetventil 14, ein zweites Magnetventil 16 und ein 3/3-Ventil 18.

Das 3/3-Ventil 18 weist innerhalb eines Gehäuses 20 eine Vielzahl von Komponenten auf. Es sind ein erster Steuerkolben 22, ein zweiter Steuerkolben 24 und ein dritter Steuerkolben 26 vorgesehen. Der erste Steuerkolben 22 bildet eine Begrenzung einer ersten Steuerkammer 30. Der zweite Steuerkolben 24 und der dritte Steuerkolben 26 bilden zusammen eine Begrenzung einer zweiten Steuerkammer 32. Der dritte Steuerkolben 26 hat eine Durchgangsöffnung 58, in der der zweite Steuerkolben 24 beweglich geführt wird. Zwischen dem ersten Steuerkolben 22 und dem zweiten Steuerkolben 24 beziehungsweise dem dritten Steuerkolben 26 ist ein Schaltkolben 28 angeordnet. Dieser weist mehrere Verdickungen 38, 40, 42 mit im Bereich der Verdickungen 38, 40, 42 angebrachten O-Ringen 44, 46, 48 auf. Über diese Verdickungen 38, 40, 42 beziehungsweise die O-Ringe 44, 46, 48 kann der Schaltkolben 28 mit der Gehäusewand 50 des 3/3-Ventils 18 abdichtend zusammenwirken. Der Steuerkolben 28 ist verschiebbar in dem Gehäuse 20 angeordnet, wobei sein erstes Ende 34 mit dem ersten Steuerkolben 22 zusammenwirken kann und sein zweites Ende 36 mit dem zweiten Steuerkolben 24 sowie indirekt mit dem dritten Steuerkolben 26 unter Vermittlung des zweiten Steuerkolbens 24 zusammenwirken kann. Das Gehäuse 20 hat mehrere Öffnungen 52, 54, 56, die je nach Stellung des Schaltkolbens 28 teilweise miteinander verbunden werden können beziehungsweise gegeneinander abgedichtet werden können.

Die erste Steuerkammer 30 kann über das Magnetventil 14 entweder entlüftet werden oder mit Druck beaufschlagt werden, wofür am Magnetventil 14 ein Druckluftvorrat 60 anliegt. Ebenso kann die zweite Steuerkammer 32 über das Magnetventil 16 entlüftet beziehungsweise mit Druck beaufschlagt werden, wobei hierfür das zweite Magnetventil 16 mit einem Druckluftvorrat 60 verbunden ist. Beide Magnetventile 14, 16 sind so ausgelegt, dass sie im unbestromten Zustand die Steuerkammern 30, 32 entlüften und im bestromten Zustand die Steuerkammern 30, 32 belüften.

Die Magnetventile 14, 16 werden elektrisch durch eine elektronische Steuerung 70 angesteuert, die in einer weiteren elektronischen Steuerung 72, beispielsweise einer elektronischen Steuerung für eine elektronische Luftaufbereitungsanlage mit Kreisschutzeinrichtung (EAC), integriert ist. Die elektronische Steuerung 70 beziehungsweise 72 ist elektrisch mit einem Betätigungselement 68 zum Betätigen der Feststellbremsanlage verbunden. Weiterhin kann die elektronische Steuerung 70 beziehungsweise 72 ein Ausgangssignal für ein Anhängersteuerventil 76 bereitstellen.

An den Öffnungen 52, 54, 56 des Gehäuses 20 des 3/3-Ventils 18 sind unterschiedliche Elemente angeschlossen. An der Versorgungsöffnung 52 liegt über ein Rückschlagventil 64 ein Druckluftvorrat an, der auch den Anhängerbremskreis 62 (Kreis 3) beliefert. Es ist vorteilhaft, die Magnetventile 14, 16 mit Druckluft zu versorgen, die der dem 3/3-Ventil zugewandten Seite des Rückschlagventils 64 entnommen wird. Auf diese Weise können die Magnetventile auch dann noch arbeiten, wenn der Rest des Systems drucklos ist, beispielsweise im Fehlerfall. An der Arbeitsöffnung 54 ist ein Federspeicherzylinder 12 angeschlossen. Über die Arbeitsöffnung 54 kann ebenfalls das Anhängersteuerventil 76 beliefert werden. Eine Entlüftung 66 ist an der Entlüftungsöffnung 56 vorgesehen.

Neben den oben beschriebenen Eingangs- und Ausgangssignalen der elektronischen Steuerung 70 beziehungsweise 72 können zahlreiche weitere elektrische Eingangs- und Ausgangssignale verarbeitet beziehungsweise bereitgestellt werden. Beispielsweise kann der Druck in dem beispielhaft dargestellten Federspeicherzylinder 12 durch einen Drucksensor 74 erfasst werden und in Form eines elektrischen Signals an die elektronische Steuerung 70 beziehungsweise 72 weitergegeben werden.

Die Feststellbremsanlage gemäß Figur 1 arbeitet wie folgt. Das Betätigungselement 68 hat drei Einstellmöglichkeiten I, II, III, die einer Fahrtstellung, einer Stoppstellung beziehungsweise einer Kontrollstellung entsprechen. In der Fahrtstellung wird der Federspeicherzylinder 12 über das 3/3-Ventil belüftet; ebenso werden sämtliche sonstige vorliegend nicht dargestellte Federspeicherzylinder belüftet. Auf diese Weise werden die Federspeicherzylinder in einen Zustand gebracht, in denen keine Bremswirkung auftritt. Soll das Fahrzeug nun geparkt werden, so wird das Betätigungselement 68 in die Stoppstellung überführt. In diesem Fall werden sowohl das dargestellte Federspeicherelement 12 als auch alle anderen Federspeicherelemente, die vorliegend nicht dargestellt sind, entlüftet. Soll nun überprüft werden, ob im Notfall die Bremswirkung des Zuges ausreichend wäre, das Fahrzeug zu halten, kann das Betätigungselement 68 in eine Kontrollstellung überführt werden. In diesem Fall kann von der elektronischen Steuerung 70 beziehungsweise 72 das Anhängersteuerventil 76 veranlasst werden, die nicht dargestellten Federspeicherzylinder des Anhängers zumindest teilweise zu belüften, so dass der gesamte Zug durch die Bremskraft der nach wie vor entlüfteten Federspeicherzylinder des Zugfahrzeugs, das heißt unter anderem von dem beispielhaft dargestellten Federspeicherzylinder 12 gehalten werden muss.

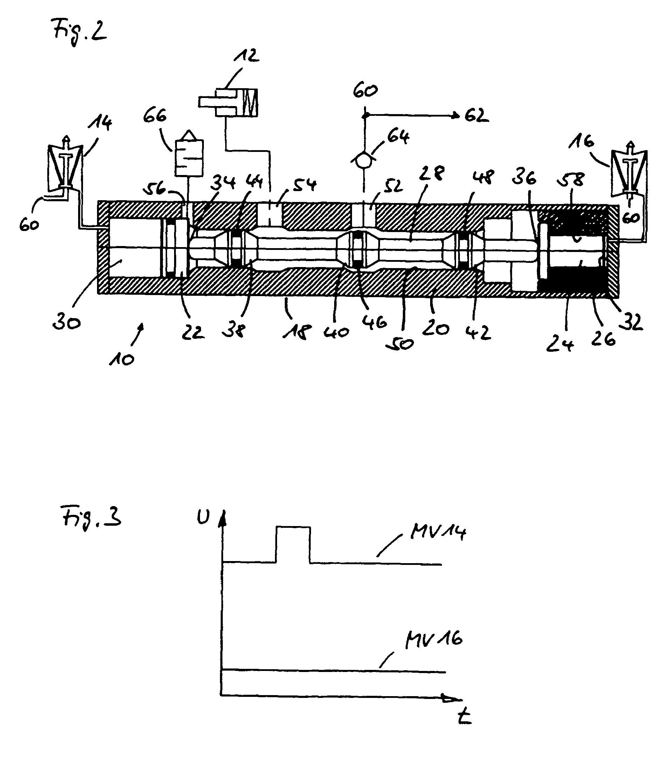

Nachfolgend wird mit Bezug auf die Figuren 2 bis 7 die Funktionsweise der erfindungsgemäßen Ventileinrichtung 10 beschrieben.

Figur 2 zeigt eine erfindungsgemäße Ventileinrichtung 10 in einem Belüftungszustand. Figur 3 zeigt ein Spannungs-Zeit-Diagramm zur Erläuterung der Ansteuerung der erfindungsgemäßen Ventileinrichtung gemäß Figur 2. Das 3/3-Ventil 18 ist in einer Betriebsstellung dargestellt, in der der Federspeicherzylinder 12 aufgrund der Verbindung zwischen der Versorgungsöffnung 52 und der Arbeitsöffnung 54 belüftet wird. Die Entlüftungsöffnung 56 ist durch den Schaltkolben 28 und insbesondere durch den im Bereich der Verdickung 38 angeordneten O-Ring 44 gegen die Arbeitsöffnung 54 und gegen die Versorgungsöffnung 52 angedichtet.

Der dargestellte Schaltzustand kann durch ein pulsförmiges Ansteuern des Magnetventils 14 hergestellt werden. In Figur 3 sind die entsprechenden Spannungsverläufe dargestellt, die hierzu den Magnetventilen 14 beziehungsweise 16 (MV14 beziehungsweise MV16) zugeführt werden können. Ausgehend von einem beliebigen Zustand des 3/3-Ventils 18, das heißt insbesondere ausgehend von einer beliebigen Lage des Schaltkolbens 28, kann der Schaltkolben 28 durch Bestromung des ersten Magnetventils 14, das heißt insbesondere auch durch kurzzeitige Bestromung, in die dargestellte Stellung gebracht werden. Die erste Steuerkammer 30 wird dabei mit Druck beaufschlagt. Der erste Steuerkolben 22 wird in Richtung der zweiten Steuerkammer 32 verschoben. Da der erste Steuerkolben 22 mit dem ersten Ende 34 des Schaltkolbens 28 zusammenwirkt, wird auch der Schaltkolben 28 in Richtung der zweiten Steuerkammer verschoben. Da der zweite Steuerkolben 24 mit dem zweiten Ende 36 des Schaltkolbens 28 zusammenwirkt und die zweite Steuerkammer 32 über das zweite Magnetventil 16 entlüftet ist, kann auch der zweite Steuerkolben 24 in entsprechende Richtung verschoben werden. Der zweite Steuerkolben 24 hat an seinem dem Schaltkolben 28 zugewandten Ende einen Bereich größeren Durchmessers, über den der zweite Steuerkolben 24 mit dem dritten Steuerkolben 26 zusammenwirkt. Somit wird auch der dritte Steuerkolben 26 bei Ansteuerung der Magnetventile, wie es in Figur 3 dargestellt ist, in entsprechende Richtung verschoben.

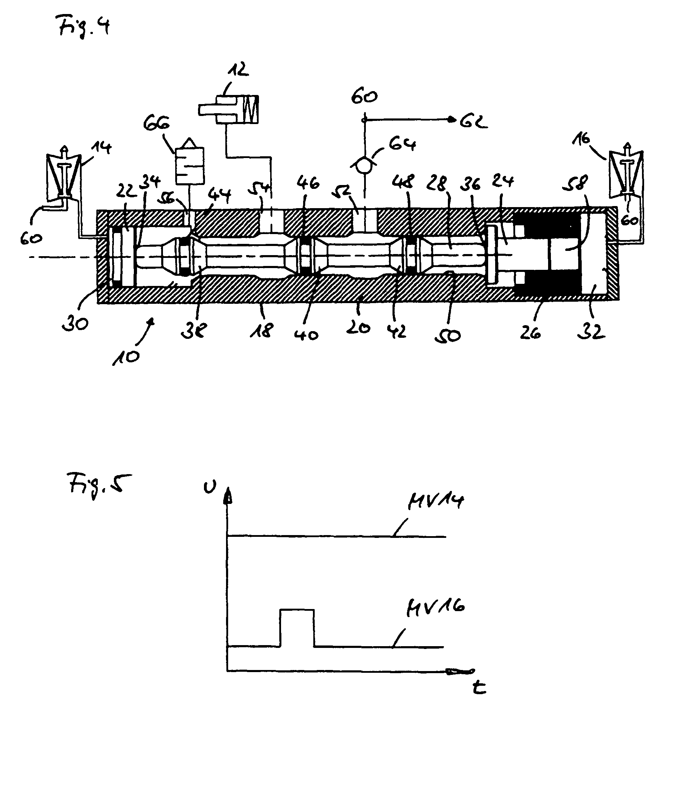

Figur 4 zeigt eine erfindungsgemäße Ventileinrichtung 10 in einem Entlüftungszustand. Figur 5 zeigt ein Spannungs-Zeit-Diagramm zur Erläuterung der Ansteuerung der erfindungsgemäßen Ventileinrichtung gemäß Figur 4. In diesem Zustand des 3/3-Ventils 18 wird der Federspeicherzylinder 12 entlüftet, da die Arbeitsöffnung 54 mit der Entlüftungsöffnung 56 verbunden ist. Die Versorgungsöffnung 52 ist gegen sowohl die Arbeitsöffnung 54 als auch die Entlüftungsöffnung 56 abgedichtet, da sich der Schaltkolben 28 in einer Stellung befindet, in der die Verdickung 40 beziehungsweise der im Bereich der Verdickung 40 angeordnete O-Ring 46 mit der Gehäusewand 50 zusammenwirkt.

Ausgehend von einem beliebigen Zustand des 3/3-Ventils 18 und insbesondere auch ausgehend von dem in Figur 2 dargestellten Zustand kann der in Figur 4 dargestellte Zustand so erreicht werden, dass die Magnetventile 14, 16 gemäß der in Figur 5 dargestellten Spannungsverläufe angesteuert werden. Insbesondere wird das Magnetventil 14 nicht angesteuert, so dass die erste Steuerkammer 30 entlüftet ist, wohingegen das Magnetventil 16 durch einen Spannungsimpuls veranlasst wird, die zweite Steuerkammer 32 mit Druck zu beaufschlagen. Erfolgt diese Druckbeaufschlagung der zweiten Steuerkammer 32, so werden, ausgehend von dem in Figur 2 dargestellten Zustand, zunächst beide Steuerkolben, das heißt der zweite Steuerkolben 24 und der dritte Steuerkolben 26 in Richtung der ersten Steuerkammer 30 getrieben. Nachdem der dritte Steuerkolben 26 eine gewisse Strecke zurückgelegt hat, schlägt er an einem an der Innenwand des Gehäuses 20 vorgesehenen Anschlag an, so dass er sich nicht weiter in Richtung der ersten Steuerkammer 30 bewegt. Der zweite Steuerkolben 24 kann sich hingegen weiter in Richtung der ersten Steuerkammer 30 bewegen, so dass letztlich der Schaltkolben 28 in die gezeigte Stellung gebracht wird.

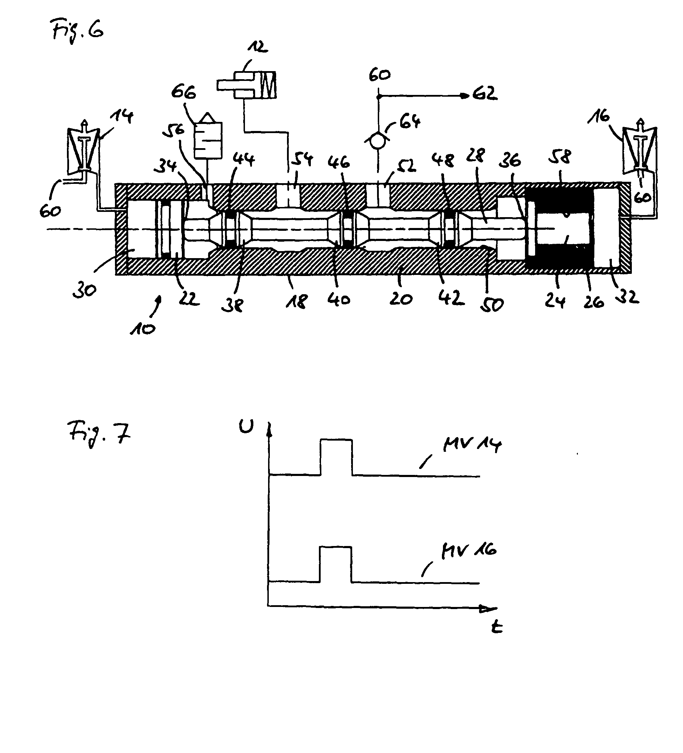

Figur 6 zeigt eine erfindungsgemäße Ventileinrichtung 10 in einer Zwischenstellung. Figur 7 zeigt ein Spannungs-Zeit-Diagramm zur Erläuterung der Ansteuerung der erfindungsgemäßen Ventileinrichtung gemäß Figur 6. In diesem Zustand sind alle Öffnungen 52, 54, 56 gegeneinander abgedichtet, insbesondere ist die Arbeitsöffnung 54 weder mit der Versorgungsöffnung 52 noch mit der Entlüftungsöffnung 56 verbunden. In diesem Zustand bleibt der Druck in dem Federspeicherzylinder 12 somit erhalten. Insbesondere kann ein Überführen des Schaltkolbens 28 in die dargestellte Position also einen Belüftungsvorgang als auch einen Entlüftungsvorgang unterbrechen.

Der dargestellte Zustand kann ausgehend von einem beliebigen Zustand, insbesondere aber auch ausgehend von den in den Figuren 2 beziehungsweise 4 dargestellten Zuständen hergestellt werden, indem die Magnetventile 14, 16 gemäß den Spannungsverläufen in Figur 7 angesteuert werden. Die beiden Magnetventile 14, 16 werden gleichzeitig bestromt, so dass die beiden Steuerkammern 30, 32 gleichzeitig mit demselben Druck beaufschlagt werden. Dass das Ventil dabei in den in Figur 6 dargestellten Zustand überführt wird, lässt sich am besten ausgehend von dem in Figur 4 dargestellten Entlüftungszustand erläutern. Bei Druckbeaufschlagung von sowohl der ersten Steuerkammer 30 als auch der zweiten Steuerkammer 32 mit dem gleichen Druck wird der Schaltkolben 28 in Richtung der zweiten Steuerkammer 32 getrieben, da der erste Steuerkolben 22 eine größere Wirkfläche aufweist als der zweite Steuerkolben 24, der in dem in Figur 4 dargestellten Zustand der einzige Steuerkolben auf Seiten der zweiten Steuerkammer 32 ist, der eine durch Druck in der zweiten Steuerkammer 32 erzeugte Kraft auf den Schaltkolben 28 übertragen kann. Erreicht der Schaltkolben 28 allerdings die in Figur 6 dargestellte Position, so dass der zweite Steuerkolben 24 an dem dritten Steuerkolben 58 anschlägt, so kann keine weitere Bewegung des Schaltkolbens 28 mehr in Richtung der zweiten Steuerkammer 32 erfolgen, da nun die Summe der Wirkflächen des zweiten Steuerkolbens 24 und des dritten Steuerkolbens 26 relevant ist. Die in Richtung der ersten Steuerkammer 30 auf den Schaltkolben 28 aufgebrachte Kraft ist bei identischem Druck in der ersten Steuerkammer 30 und der zweiten Steuerkammer 32 also größer als die Kraft, die in Richtung auf die zweite Steuerkammer 32 auf den Schaltkolben 28 aufgebracht wird. Durch diese Kraftverhältnisse wird eine weitere Verschiebung des Schaltkolbens 28 in Richtung auf die zweite Steuerkammer 32 verhindert. Eine weitere Verschiebung des Schaltkolbens 28 in Richtung auf die erste Steuerkammer 30 wird dadurch verhindert, dass einerseits der dritte Steuerkolben 26 am Gehäuse 20 anschlägt und andererseits die Wirkfläche des zweiten Steuerkolbens 24 geringer ist als die Wirkfläche des ersten Steuerkolbens 22.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Ventileinrichtung
- 12: Federspeicherzylinder
- 14: Magnetventil
- 16: Magnetventil
- 18: 3/3-Ventil
- 20: Gehäuse
- 22: erster Steuerkolben
- 24: zweiter Steuerkolben
- 26: dritter Steuerkolben
- 28: Schaltkolben
- 30: erste Steuerkammer
- 32: zweite Steuerkammer
- 34: erstes Ende des Schaltkolbens
- 36: zweites Ende des Schaltkolbens
- 38: erste Verdickung
- 40: zweite Verdickung
- 42: dritte Verdickung
- 44: erster O-Ring
- 46: zweiter O-Ring
- 48: dritter O-Ring
- 50: Gehäusewand
- 52: Versorgungsöffnung
- 54: Arbeitsöffnung
- 56: Entlüftungsöffnung
- 58: Durchgangsöffnung
- 60: Druckluftvorrat
- 62: Anhängerbremskreis
- 64: Rückschlagventil
- 66: Entlüftung
- 68: Betätigungselement
- 70: elektronische Steuerung der Feststellbremsanlage
- 72: weitere elektronische Steuerung (zum Beispiel EAC)
- 74: Drucksensor
- 76: Anhänger-Steuerventil

## Patentansprüche

1. Ventileinrichtung (10) zum Belüften und Entlüften von mindestens einem Federspeicherzylinder (12) in einer Bremsanlage eines Nutzfahrzeugs, mit
- einem ersten Magnetventil (14),
- einem zweiten Magnetventil (16) und
- einem 3/3-Ventil (18) mit einem Gehäuse (20), mindestens drei Steuerkolben (22, 24, 26) und mindestens einem Schaltkolben (28),
- wobei über das erste Magnetventil (14) eine erste Steuerkammer (30) eines ersten Steuerkolbens (22) mit Druck beaufschlagt werden kann,
- wobei über das zweite Magnetventil (16) eine gemeinsame zweite Steuerkammer (32) eines zweiten Steuerkolbens (24) und eines dritten Steuerkolbens (26) mit Druck beaufschlagt werden kann,
- wobei zur Darstellung verschiedener Schaltzustände durch Druckbeaufschlagung der Steuerkammern (30, 32) unter Vermittlung der Steuerkolben (22, 24, 26) der mindestens eine Schaltkolben (28) verschoben werden kann, indem der erste Steuerkolben (22) auf ein erstes Ende (34) des Schaltkolbens (28) wirkt und der zweite Steuerkolben (24) sowie der dritte Steuerkolben (26) auf ein zweites Ende (36) des Schaltkolbens (28) wirken,
- wobei die Wirkfläche des ersten Steuerkolbens (22) größer ist als die Wirkfläche des zweiten Steuerkolbens (24) und die Wirkfläche des ersten Steuerkolbens (22) kleiner ist als die Summe der Wirkflächen des zweiten Steuerkolbens (24) und des dritten Steuerkolbens (26), so dass bei einer negativen Druckdifferenz zwischen der ersten Steuerkammer (30) und der zweiten Steuerkammer (32) der Schaltkolben (28) in eine erste Endstellung in Richtung der ersten Steuerkammer (30) getrieben wird, bei einer positiven Druckdifferenz zwischen der ersten Steuerkammer (30) und der zweiten Steuerkammer (32) der Schaltkolben (28) in eine zweite Endstellung in Richtung der zweiten Steuerkammer (32) getrieben wird und bei gleichem Druck oberhalb Atmosphärendruck in der ersten Steuerkammer (30) und in der zweiten Steuerkammer (32) der Schaltkolben (28) in eine Zwischenstellung getrieben wird, so dass über die Stellung des Schaltkolbens (28) der Zustand des mindestens einen Federspeicherzylinders (12) bestimmt werden kann.

2. Ventileinrichtung (10) nach Anspruch 1, **dadurch gekennzeichnet,**
- **dass** der Schaltkolben (28) mehrere Verdickungen (38, 40, 42) mit Dichtmitteln (44, 46, 48) aufweist, so dass Bereiche um den Schaltkolben (28) gegen eine Gehäusewand (50) des 3/3-Ventils (18) abgedichtet werden können,
- **dass** in einer Gehäusewand (50) des 3/3-Ventils (18) eine Versorgungsöffnung (52), eine Arbeitsöffnung (54) und eine Entlüftungsöffnung (56) vorgesehen sind,
- **dass** in der ersten Endstellung die Arbeitsöffnung (54) mit der Entlüftungsöffnung (56) verbunden ist,
- **dass** in der zweiten Endstellung die Arbeitsöffnung (54) mit der Versorgungsöffnung (52) verbunden ist und
- **dass** in der Zwischenstellung die Versorgungsöffnung (52), die Arbeitsöffnung (54) und die Entlüftungsöffnung (56) gegeneinander abgedichtet sind.

3. Ventileinrichtung (10) nach Anspruch 1 oder 2, **dadurch gekennzeichnet,**
- **dass** der dritte Steuerkolben (26) eine Durchgangsöffnung (58) aufweist,
- **dass** der zweite Steuerkolben (24) in der Durchgangsöffnung (58) des dritten Steuerkolbens (26) geführt wird,
- **dass** eine Bewegung des zweiten Steuerkolbens (24) in Richtung der ersten Steuerkammer (30) durch ein Anschlagen an dem Gehäuse (20) des 3/3-Ventils (18) begrenzt ist,
- **dass** eine Bewegung des zweiten Steuerkolbens (24) in Richtung der zweiten Steuerkammer (32) durch ein Anschlagen an dem dritten Steuerkolben (26) begrenzt ist und
- **dass** eine Bewegung des dritten Steuerkolbens (26) in Richtung der ersten Steuerkammer (30) durch ein Anschlagen an dem Gehäuse (20) des 3/3-Ventils (18) begrenzt ist,
- wobei bei einer gemeinsamen Bewegung des zweiten Steuerkolbens (24) und des dritten Steuerkolbens (26) in Richtung der ersten Steuerkammer (30) der dritte Steuerkolben (26) vor dem zweiten Steuerkolben (24) an dem Gehäuse (20) des 3/3-Ventils (18) anschlägt.

4. Ventileinrichtung (10) nach einem der vorangehenden Ansprüche, **dadurch gekennzeichnet,**
- **dass** zum Umschalten zwischen den Stellungen des Schaltkolbens (28) Druckimpulse verwendet werden und
- **dass** in Abwesenheit von Druckimpulsen der Schaltkolben (28) in seiner Stellung verharrt.

5. Ventileinrichtung (10) nach einem der vorangehenden Ansprüche, **dadurch gekennzeichnet,**
- **dass** die Magnetventile (14, 16) elektrisch ansteuerbar sind und
- **dass** an der Arbeitsöffnung (54) mindestens ein Federspeicherzylinder (12) anschließbar ist, so dass die Ventileinrichtung (10) im Rahmen einer elektrisch ansteuerbaren Feststellbremsanlage einsetzbar ist.

6. Feststellbremsanlage, insbesondere für Nutzfahrzeuge, mit einer Ventileinrichtung (10) nach einem der vorangehenden Ansprüche.

7. Feststellbremsanlage nach Anspruch 6, **dadurch gekennzeichnet,**
- **dass** ein elektrisches Betätigungselement (68) vorgesehen ist, das mit einer elektronischen Steuerung (70) für die Feststellbremsanlage kommunizieren kann, und
- **dass** die elektronische Steuerung (70) für die Feststellbremsanlage zumindest teilweise in einer für weitere Zwecke vorgesehenen elektronischen Steuerung (72) integriert ist.

8. Feststellbremsanlage nach Anspruch 7, **dadurch gekennzeichnet, dass** das Betätigungselement (68) drei Einstellmöglichkeiten aufweist, wobei
- in einer Fahrstellung alle beteiligten Federspeicherzylinder (12) belüftet werden,
- in einer Stoppstellung alle beteiligten Federspeicherzylinder (12) entlüftet werden und
- in einer Kontrollstellung eine erste Gruppe (12) von Federspeicherzylindern entlüftet wird beziehungsweise ist und eine zweite Gruppe von Federspeicherzylindern belüftet wird.

9. Feststellbremsanlage nach Anspruch 8, **dadurch gekennzeichnet,**
- **dass** die erste Gruppe (12) von Federspeicherzylindern einem Zugfahrzeug eines Nutzkraftfahrzeugs zugeordnet ist und
- **dass** die zweite Gruppe von Federspeicherzylindern mindestens einem Anhänger eines Nutzkraftfahrzeugs zugeordnet ist.

10. Feststellbremsanlage nach einem der Ansprüche 7 bis 9, **dadurch gekennzeichnet, dass** die elektronische Steuerung (70) für die Feststellbremsanlage zumindest teilweise in einem Bordrechner, einem Fahrzeugführungsrechner, in einer Steuerung für ein elektronisches Bremssystem (EBS) und/oder in einer Steuerung (72) einer elektronischen Luftaufbereitungsanlage mit Kreisschutzeinrichtung (EAC) integriert ist.

11. Verfahren zum Belüften und Entlüften von mindestens einem Federspeicherzylinder (12) in einer Bremsanlage eines Nutzfahrzeugs, bei dem
- ein erstes Magnetventil (14), ein zweites Magnetventil (16) und ein 3/3-Ventil (18) mit einem Gehäuse (20), mindestens drei Steuerkolben (22, 24, 26) und mindestens einem Schaltkolben (28) verwendet werden,
- wobei über das erste Magnetventil (14) eine erste Steuerkammer (30) eines ersten Steuerkolbens (22) mit Druck beaufschlagt werden kann,
- wobei über das zweite Magnetventil (16) eine gemeinsame zweite Steuerkammer (32) eines zweiten Steuerkolbens (24) und eines dritten Steuerkolbens (26) mit Druck beaufschlagt werden kann,
- wobei zur Darstellung verschiedener Schaltzustände durch Druckbeaufschlagung der Steuerkammern (30, 32) unter Vermittlung der Steuerkolben (22, 24, 26) der mindestens eine Schaltkolben (28) verschoben werden kann, indem der erste Steuerkolben (22) auf ein erstes Ende (34) des Schaltkolbens (28) wirkt und der zweite Steuerkolben (24) sowie der dritte Steuerkolben (26) auf ein zweites Ende (36) des Schaltkolbens (28) wirken,
- wobei die Wirkfläche des ersten Steuerkolbens (22) größer ist als die Wirkfläche des zweiten Steuerkolbens (24) und die Wirkfläche des ersten Steuerkolbens (22) kleiner ist als die Summe der Wirkflächen des zweiten Steuerkolbens (24) und des dritten Steuerkolbens (26), so dass bei einer negativen Druckdifferenz zwischen der ersten Steuerkammer (30) und der zweiten Steuerkammer (32) der Schaltkolben (28) in eine erste Endstellung in Richtung der ersten Steuerkammer (30) getrieben wird, bei einer positiven Druckdifferenz zwischen der ersten Steuerkammer (30) und der zweiten Steuerkammer (32) der Schaltkolben (28) in eine zweite Endstellung in Richtung der zweiten Steuerkammer (32) getrieben wird und bei gleichem Druck oberhalb Atmosphärendruck in der ersten Steuerkammer (30) und in der zweiten Steuerkammer (32) der Schaltkolben (28) in eine Zwischenstellung getrieben wird, so dass über die Stellung des Schaltkolbens (28) der Zustand des mindestens einen Federspeicherzylinders (12) bestimmt werden kann.

12. Verfahren nach Anspruch 11, **dadurch gekennzeichnet,**
- **dass** der Schaltkolben (28) mehrere Verdickungen (38, 40, 42) mit Dichtmitteln (44, 46, 48) aufweist, so dass Bereiche um den Schaltkolben (28) gegen eine Gehäusewand (50) des 3/3-Ventils (18) abgedichtet werden,
- **dass** in einer Gehäusewand (50) des 3/3-Ventils (18) eine Versorgungsöffnung (52), eine Arbeitsöffnung (54) und eine Entlüftungsöffnung (56) vorgesehen sind,
- **dass** in der ersten Endstellung die Arbeitsöffnung (54) mit der Entlüftungsöffnung (56) verbunden ist,
- **dass** in der zweiten Endstellung die Arbeitsöffnung (54) mit der Versorgungsöffnung (52) verbunden ist und
- **dass** in der Zwischenstellung die Versorgungsöffnung (52), die Arbeitsöffnung (54) und die Entlüftungsöffnung (56) gegeneinander abgedichtet sind.

13. Verfahren nach Anspruch 11 oder 12, **dadurch gekennzeichnet,**
- **dass** der dritte Steuerkolben (26) eine Durchgangsöffnung (58) aufweist,
- **dass** der zweite Steuerkolben (24) in der Durchgangsöffnung (58) des dritten Steuerkolbens (26) geführt wird,
- **dass** eine Bewegung des zweiten Steuerkolbens (24) in Richtung der ersten Steuerkammer (30) durch ein Anschlagen an dem Gehäuse (20) des 3/3-Ventils (18) begrenzt wird und
- **dass** eine Bewegung des zweiten Steuerkolbens (24) in Richtung der zweiten Steuerkammer (32) durch ein Anschlagen an dem dritten Steuerkolben (26) begrenzt wird,
- wobei bei einer gemeinsamen Bewegung des zweiten Steuerkolbens (24) und des dritten Steuerkolbens (26) in Richtung der ersten Steuerkammer (30) der dritte Steuerkolben (26) vor dem zweiten Steuerkolben (24) an dem Gehäuse (20) des 3/3-Ventils (18) anschlägt.

14. Verfahren nach einem der Ansprüche 11 bis 13, **dadurch gekennzeichnet,**
- **dass** zum Umschalten zwischen den Stellungen des Schaltkolbens (28) Druckimpulse verwendet werden und
- **dass** in Abwesenheit von Druckimpulsen der Schaltkolben (28) in seiner Stellung verharrt.

15. Verfahren nach einem der Ansprüche 11 bis 14, **dadurch gekennzeichnet,**
- **dass** die Magnetventile (14, 16) elektrisch angesteuert werden und
- **dass** an der Arbeitsöffnung (54) mindestens ein Federspeicherzylinder (12) anschließbar ist, so dass das Verfahren im Rahmen einer elektrisch ansteuerbaren Feststellbremsanlage verwendbar ist.

16. Verfahren nach Anspruch 15, **dadurch gekennzeichnet,**
- **dass** ein elektrisches Betätigungselement (68) vorgesehen ist, das mit einer elektronischen Steuerung (70) für die Feststellbremsanlage kommuniziert, und
- **dass** die elektronische Steuerung (70) für die Feststellbremsanlage zumindest teilweise in einer für weitere Zwecke vorgesehenen elektronischen Steuerung (72) integriert ist.

17. Verfahren nach Anspruch 16, **dadurch gekennzeichnet, dass** das Betätigungselement (68) drei Einstellmöglichkeiten aufweist, wobei
- in einer Fahrstellung alle beteiligten Federspeicherzylinder (12) belüftet werden,
- in einer Stoppstellung alle beteiligten Federspeicherzylinder (12) entlüftet werden und
- in einer Kontrollstellung eine erste Gruppe (12) von Federspeicherzylindern entlüftet wird beziehungsweise ist und eine zweite Gruppe von Federspeicherzylindern belüftet wird.

18. Verfahren nach Anspruch 17, **dadurch gekennzeichnet,**
- **dass** die erste Gruppe (12) von Federspeicherzylindern einem Zugfahrzeug eines Nutzkraftfahrzeugs zugeordnet ist und
- **dass** die zweite Gruppe von Federspeicherzylindern mindestens einem Anhänger eines Nutzkraftfahrzeugs zugeordnet ist.

19. Verfahren nach einem der Ansprüche 15 bis 18, **dadurch gekennzeichnet, dass** die elektronische Steuerung (70) für die Feststellbremsanlage zumindest teilweise in einem Bordrechner, einem Fahrzeugführungsrechner, in einer Steuerung für ein elektronisches Bremssystem (EBS) und/oder in einer Steuerung (72) einer elektronischen Luftaufbereitungsanlage mit Kreisschutzeinrichtung (EAC) integriert ist.

## Claims

1. Valve means (10) for aerating and venting at least one spring-loaded brake cylinder (12) in a brake system of a commercial vehicle, comprising:
- a first solenoid-operated valve (14);
- a second solenoid-operated valve (16) and
- a 3/3-way valve (18) including a housing (20), at least three control pistons (22, 24, 26) and at least one change-over piston (28),
- wherein a first control chamber (30) of a first control piston (22) may be pressurised via said first solenoid-operated valve (14),
- wherein a common second control chamber (32) of a second control piston (24) and of a third control piston (26) may be pressurised via said second solenoid-operated valve (16),
- wherein said at least one change-over piston (28) may be displaced for representing different switching conditions by pressurisation of said control chambers (30, 32), by the intermediary action of said control pistons (22, 24, 26), by said first control piston (22) acting upon a first end (34) of said change-over piston (28) and by said second control piston (24) as well as said third control piston (26) acting upon a second end (36) of said change-over piston (28),
- with the active area of said first control piston (22) being larger than the active area of said second control piston (24) and with the active area of said first control piston (22) being smaller than the total of the active areas of said second control piston (24) and of said third control piston (26) so that, with a negative differential pressure between said first control chamber (30) and said second control chamber (32), said change-over piston (28) is driven into a first terminal position in a direction towards said first control chamber (30), and, with a positive differential pressure between said first control chamber (30) and said second control chamber (32), said change-over piston (28) is driven into a second terminal position in a direction towards said second control chamber (32), and, with equal pressure above the atmospheric pressure in said first control chamber (30) and in said second control chamber (32), said change-over piston (28) is driven into an intermediate position so that the condition of said at least one spring-loaded brake cylinder (12) may be determined via the position of said change-over piston (28).

2. Valve means (10) according to Claim 1, **characterised in**
- **that** said change-over piston (28) presents several thickened sections (38, 40, 42) with sealing means (44, 46, 48) so that zones around said change-over piston (28) may be sealed against a housing wall (50) of said 3/3-way valve (18),
- **that** a supply opening (52), an operating opening (54) and a venting opening (56) are provided in a housing wall (50) of said 3/3-way valve (18,
- **that** in said first terminal position, said operating opening (54) is connected to said venting opening (56),
- **that** in said second terminal position, said operating opening (54) is connected to said supply opening (52), and
- **that** in said intermediate position, said supply opening (52), said operating opening (54) and said venting opening (56) are sealed relative to each other.

3. Valve means (10) according to Claim 1 or 2, **characterised in**
- **that** said third control piston (26) presents a port (58),
- **that** said second control piston (24) is guided in said port (58) of said third control piston (26),
- **that** a movement of said second control piston (24) in a direction towards said first control chamber (30) is limited by its striking against the housing (20) of said 3/3-way valve (18),
- **that** a movement of said second control piston (24) in a direction towards said second control chamber (32) is limited by its striking against said third control piston (26), and
- **that** a movement of said third control piston (26) in a direction towards said first control chamber (30) is limited by its striking against said housing (20) of said 3/3-way valve,
- with said third control piston (26) striking against the housing (20) of said 3/3-way valve (18) prior to said second control piston (24) in the case of a common movement of said second control piston (24) and said third control piston (26) in a direction towards said first control chamber (30).

4. Valve means (10) according to any of the preceding Claims, **characterised in**
- **that** pressure pulses are used for changing over between the positions of said change-over piston (28), and
- **that** in the case of absence of pressure pulses, said change-over piston (28) remains in its position.

5. Valve means (10) according to any of the preceding Claims, **characterised in**
- **that** said solenoid-operated valves (14, 16) are electrically controllable, and
- **that** at least one spring-loaded brake cylinder (12) is adapted to be connected to said operating opening (54) so that said valve means (10) is suitable for application within the general framework of an electrically controllable parking brake system.

6. Parking brake system, in particular for commercial vehicles, comprising a valve means (10) according to any of the preceding Claims.

7. Parking brake system according to Claim 6, **characterised in**
- **that** an electrical actuator element (68) is provided which is capable of communicating with an electronic controller (70) for the parking brake system, and
- **that** said electronic controller (70) for the parking brake system is integrated, at least partly, into an electronic controller (72) provided for further purposes.

8. Parking brake system according to Claim 7, **characterised in that** said actuator element (68) presents three potential settings,
- with all spring-loaded brake cylinders (12) involved being vented in a running position,
- with all spring-loaded brake cylinders (12) being vented in a stop position, and
- and in a monitoring position, with a first group (12) of spring-loaded brake cylinders being vented whilst a second group of spring-loaded brake cylinders is aerated.

9. Parking brake system according to Claim 8, **characterised in**
- **that** said first group (12) of spring-loaded brake cylinders is associated with a tractor vehicle of a commercial vehicle, and
- **that** said second group of spring-loaded brake cylinders is associated with at least one trailer of a commercial vehicle.

10. Parking brake system according to any of the Claims 7 to 9, **characterised in that** said electronic controller (70) for the parking brake system is integrated, at least partly, into an on-board computer, into a driver's computer, into a controller for an electronic brake system (EBS) and/or into a controller (72) of an electronic air conditioning system with circuit protection means (EAC).

11. Method of aerating and venting at least one spring-loaded brake cylinder (12) in a brake system of a commercial vehicle, wherein
- a first solenoid-operated valve (14), a second solenoid-operated valve (16) and a 3/3-way valve (18) with a housing (20), at least three control pistons (22, 24, 26) and at least one change-over piston (28) are used,
- wherein a first control chamber (30) of a first control piston (22) may be pressurised via said first solenoid-operated valve (14),
- wherein a common second control chamber (32) of a second control piston (24) and of a third control piston (26) may be pressurised via said second solenoid-operated valve (16),
- wherein said at least one change-over piston (28) may be displaced for representing different switching conditions by pressurisation of said control chambers (30, 32), by the intermediary action of said control pistons (22, 24, 26), by said first control piston (22) acting upon a first end (34) of said change-over piston (28) and by said second control piston (24) as well as said third control piston (26) acting upon a second end (36) of said change-over piston (28),
- with the active area of said first control piston (22) being larger than the active area of said second control piston (24) and with the active area of said first control piston (22) being smaller than the total of the active areas of said second control piston (24) and of said third control piston (26) so that, with a negative differential pressure between said first control chamber (30) and said second control chamber (32), said change-over piston (28) is driven into a first terminal position in a direction towards said first control chamber (30), and, with a positive differential pressure between said first control chamber (30) and said second control chamber (32), said change-over piston (28) is driven into a second terminal position in a direction towards said second control chamber (32), and, with equal pressure above the atmospheric pressure in said first control chamber (30) and in said second control chamber (32), said change-over piston (28) is driven into an intermediate position so that the condition of said at least one spring-loaded brake cylinder (12) may be determined via the position of said change-over piston (28).

12. Method according to Claim 11, **characterised in**
- **that** said change-over piston (28) presents several thickened sections (38, 40, 42) with sealing means (44, 46, 48) so that zones around said change-over piston (28) may be sealed against a housing wall (50) of said 3/3-way valve (18),
- **that** a supply opening (52), an operating opening (54) and a venting opening (56) are provided in a housing wall (50) of said 3/3-way valve (18),
- **that** in said first terminal position, said operating opening (54) is connected to said venting opening (56),
- **that** in said second terminal position, said operating opening (54) is connected to said supply opening (52), and
- **that** in said intermediate position, said supply opening (52), said operating opening (54) and said venting opening (56) are sealed relative to each other.

13. Method according to Claim 11 or 12, **characterised in**
- **that** said third control piston (26) presents a port (58),
- **that** said second control piston (24) is guided in said port (58) of said third control piston (26),
- **that** a movement of said second control piston (24) in a direction towards said first control chamber (30) is limited by its striking against the housing (20) of said 3/3-way valve (18), and
- **that** a movement of said second control piston (24) in a direction towards said second control chamber (32) is limited by its striking against said third control piston (26),
- with said third control piston (26) striking against the housing (20) of said 3/3-way valve (18) prior to said second control piston (24) in the case of a common movement of said second control piston (24) and said third control piston (26) in a direction towards said first control chamber (30).

14. Method according to any of the Claims 11 to 13, **characterised in**
- **that** pressure pulses are used for changing over between the positions of said change-over piston (28), and
- **that** in the case of absence of pressure pulses, said change-over piston (28) remains in its position.

15. Method according to any of the Claims 11 to 14, **characterised in**
- **that** said solenoid-operated valves (14, 16) are electrically controllable, and
- **that** at least one spring-loaded brake cylinder (12) is adapted to be connected to said operating opening (54) so that said valve means (10) is suitable for application within the general framework of an electrically controllable parking brake system.

16. Method according to Claim 15, **characterised in**
- **that** an electrical actuator element (68) is provided which communicates with an electronic controller (70) for the parking brake system, and
- **that** said electronic controller (70) for the parking brake system is integrated, at least partly, into an electronic controller (72) provided for further purposes.

17. Method according to Claim 16, **characterised in that** said actuator element (68) presents three potential settings,
- with all spring-loaded brake cylinders (12) involved being vented in a running position,
- with all spring-loaded brake cylinders (12) being vented in a stop position, and
- in a monitoring position, with a first group (12) of spring-loaded brake cylinders being vented whilst a second group of spring-loaded brake cylinders is aerated.

18. Method according to Claim 17, **characterised in**
- **that** said first group (12) of spring-loaded brake cylinders is associated with a tractor vehicle of a commercial vehicle, and
- **that** said second group of spring-loaded brake cylinders is associated with at least one trailer of a commercial vehicle.

19. Method according to any of the Claims 15 to 18, **characterised in that** said electronic controller (70) for the parking brake system is integrated, at least partly, into an on-board computer, into a driver's computer, into a controller for an electronic brake system (EBS) and/or into a controller (72) of an electronic air conditioning system with circuit protection means (EAC).

## Revendications

1. Moyen à soupape (10) à aérer et désaérer au moins un cylindre de frein à ressort (12) dans un système de frein d'un véhicule utilitaire, comprenant :
- une première vanne magnétique (14);
- une deuxième vanne magnétique (16) et
- une vanne à 3/3 voies (18) comprenant un carter (20), au moins trois pistons pilotes (22, 24, 26) et au moins un piston de manoeuvre (28),
- dans lequel une première chambre de commande (30) d'un premier piston pilote (22) est apte à être mise sous pression via ladite première vanne magnétique (14),
- dans lequel une deuxième chambre de commande (32) commune d'un deuxième piston pilote (24) et d'un troisième piston pilote (26) est apte à être mise sous pression via ladite deuxième vanne magnétique (16),
- dans lequel ledit au moins un piston de manoeuvre (28) se peut déplacer à représenter des états différents de manoeuvre en mettant sous pression lesdites chambres de commande (30, 32), par l'action intermédiaire desdits pistons pilotes (22, 24, 26), moyennant ledit premier piston pilote (22) agissant sur une première extrémité (34) dudit piston de manoeuvre (28) et moyennant ledit deuxième piston pilote (24) ainsi que ledit troisième piston pilote (26) agissant sur une deuxième extrémité (36) dudit piston de manoeuvre (28),
- à la surface active dudit premier piston pilote (22) étant plus large que la surface active dudit deuxième piston pilote (24) et à la surface active dudit premier piston pilote (22) étant plus petite que la somme des surfaces actives dudit deuxième piston pilote (24) et dudit troisième piston pilote (26) d'une telle manière, qu'à une différence négative de pression entre ladite première chambre de commande (30) et ladite deuxième chambre de commande (32), ledit piston de manoeuvre (28) est entraîné en une première position de fin de course en une direction vers ladite première chambre de commande (30), et, à une différence positive de pression entre ladite première chambre de commande (30) et ladite deuxième chambre de commande (32), ledit piston de manoeuvre (28) est entraîné en une deuxième position de fin de course en une direction vers ladite deuxième chambre de commande (32), et, à une pression égale supérieure à la pression atmosphérique dans ladite première chambre de commande (30) et dans ladite deuxième chambre de commande (32), ledit piston de manoeuvre (28) est entraîné en une position intermédiaire, d'une telle manière, que l'état dudit au moins un cylindre de frein à ressort (12) se puisse établir par la position dudit piston de manoeuvre (28).

2. Moyen à soupape (10) selon la revendication 1, **caractérisé en ce**
- **que** ledit piston de manoeuvre (28) présente plusieurs zones gonflées (38, 40, 42) aux moyens d'étanchéité (44, 46, 48) d'une telle manière, que des zones autour ledit piston de manoeuvre (28) se puissent étancher contre une paroi de carter (50) de ladite vanne à 3/3 voies (18),
- **qu'**une ouverture d'alimentation (52), une ouverture de travail (54) et une ouverture de purge d'air (56) sont formées dans une paroi de carter (50) de ladite vanne à 3/3 voies (18,
- **qu'**à ladite première position de fin de course, ladite ouverture de travail (54) est reliée à ladite ouverture de purge d'air (56),
- **qu'**à ladite deuxième position de fin de course, ladite ouverture de travail (54) est reliée à ladite ouverture d'alimentation (52), et
- **qu'**à la position intermédiaire, ladite ouverture d'alimentation (52), ladite ouverture de travail (54) et ladite ouverture de purge d'air (56) sont rendues étanche l'une relativement à l'autre.

3. Moyen à soupape (10) selon la revendication 1 ou 2, **caractérisé en ce**
- **que** ledit troisième piston pilote (26) présente une orifice (58),
- **que** ledit deuxième piston pilote (24) est guidé dans ladite orifice (58) dudit troisième piston pilote (26),
- **qu'**un mouvement dudit deuxième piston pilote (24) en une direction vers ladite première chambre de commande (30) est limité par son arrêt contre le carter (20) de ladite vanne à 3/3 voies (18),
- **qu'**un mouvement dudit deuxième piston pilote (24) en une direction vers ladite deuxième chambre de commande (32) est limité par son arrêt contre ledit troisième piston pilote (26), et
- **qu'**un mouvement dudit troisième piston pilote (26) en une direction vers ladite première chambre de commande (30) est limité par son arrêt contre ledit carter (20) de ladite vanne à 3/3 voies,
- audit troisième piston pilote (26) s'arrêtant contre le carter (20) de ladite vanne à 3/3 voies (18) avant ledit deuxième piston pilote (24) au cas d'un mouvement commun dudit deuxième piston pilote (24) et dudit troisième piston pilote (26) en une direction vers ladite première chambre de commande (30).

4. Moyen à soupape (10) selon une quelconque des revendications précédentes, **caractérisé en ce**
- **que** des impulsions de pression sont utilisées à commuter entre les positions dudit piston de manoeuvre (28), et
- **qu'**au cas de l'absence des impulsions de pression, ledit piston de manoeuvre (28) reste en sa position.

5. Moyen à soupape (10) selon une quelconque des revendications précédentes, **caractérisé en ce**
- **que** lesdites vannes magnétiques (14, 16) sont commandable de manière électrique, et
- **qu'**au moins un cylindre de frein à ressort (12) est apte à être relié à ladite ouverture de travail (54) d'une telle manière, que ledit moyen à soupape (10) se prête à l'emploi dans le cadre d'un système de frein de stationnement à commande électrique.

6. Système de frein de stationnement, en particulier pour véhicules utilitaires, comprenant un moyen à soupape (10) selon une quelconque des revendications précédentes.

7. Système de frein de stationnement selon la revendication 6, **caractérisé en ce**
- **qu'**un élément actionneur électrique (68) est disposé, qui est apte à entrer en communication avec une unité électronique de commande (70) pour le système de frein de stationnement, et
- **que** ladite unité électronique de commande (70) pour le système de frein de stationnement est intégrée, au moins en partie, dans une unité électronique de commande (72) prévue à des autres fins.

8. Système de frein de stationnement selon la revendication 7, **caractérisé en ce que** ledit élément actionneur (68) présente trois états de réglage potentiels,
- à tous les cylindres de frein à ressort (12) concernés étant désaérés en une position de conduite,
- à tous les cylindres de frein à ressort (12) étant désaérés en une position d'arrêt, et
- à une position de contrôle, à un premier groupe (12) de cylindres de frein à ressort étant désaérés pendant qu'un deuxième groupe de cylindres de frein à ressort est aéré.

9. Système de frein de stationnement selon la revendication 8, **caractérisé en ce**
- **que** ledit premier groupe (12) de cylindres de frein à ressort est affecté à un véhicule tracteur d'un véhicule utilitaire, et
- **que** ledit deuxième groupe de cylindres de frein à ressort est affecté à au moins une remorque d'un véhicule utilitaire.

10. Système de frein de stationnement selon une quelconque des revendications 7 à 9, **caractérisé en ce que** ladite unité électronique de commande (70) pour le système de frein de stationnement est intégrée, au moins en partie, dans un ordinateur de bord, dans l'ordinateur du conducteur, dans une unité de commande pour un système de frein électronique (EBS) et/ou dans une unité de commande (72) d'un système de traitement d'air aux moyens protecteurs de circuit (EAC).

11. Procédé à aérer et désaérer au moins un cylindre de frein à ressort (12) dans un système de frein d'un véhicule utilitaire, dans lequel
- une première vanne magnétique (14), une deuxième vanne magnétique (16) et une vanne à 3/3 voies (18) à un carter (20), au moins trois pistons pilotes (22, 24, 26) et au moins un piston de manoeuvre (28) sont utilisés,
- dans lequel une première chambre de commande (30) d'un premier piston pilote (22) est apte à être mise sous pression via ladite première vanne magnétique (14),
- dans lequel une deuxième chambre de commande (32) commune d'un deuxième piston pilote (24) et d'un troisième piston pilote (26) est apte à être mise sous pression via ladite deuxième vanne magnétique (16),
- dans lequel ledit au moins un piston de manoeuvre (28) se peut déplacer à représenter des états différents de manoeuvre en mettant sous pression lesdites chambres de commande (30, 32), par l'action intermédiaire desdits pistons pilotes (22, 24, 26), moyennant ledit premier piston pilote (22) agissant sur une première extrémité (34) dudit piston de manoeuvre (28) et moyennant ledit deuxième piston pilote (24) ainsi que ledit troisième piston pilote (26) agissant sur une deuxième extrémité (36) dudit piston de manoeuvre (28),
- à la surface active dudit premier piston pilote (22) étant plus large que la surface active dudit deuxième piston pilote (24) et à la surface active dudit premier piston pilote (22) étant plus petite que la somme des surfaces actives dudit deuxième piston pilote (24) et dudit troisième piston pilote (26) d'une telle manière, qu'à une différence négative de pression entre ladite première chambre de commande (30) et ladite deuxième chambre de commande (32), ledit piston de manoeuvre (28) est entraîné en une première position de fin de course en une direction vers ladite première chambre de commande (30), et, à une différence positive de pression entre ladite première chambre de commande (30) et ladite deuxième chambre de commande (32), ledit piston de manoeuvre (28) est entraîné en une deuxième position de fin de course en une direction vers ladite deuxième chambre de commande (32), et, à une pression égale, supérieure à la pression atmosphérique dans ladite première chambre de commande (30) et dans ladite deuxième chambre de commande (32), ledit piston de manoeuvre (28) est entraîné en une position intermédiaire, d'une telle manière, que l'état dudit au moins un cylindre de frein à ressort (12) se puisse établir par la position dudit piston de manoeuvre (28).

12. Procédé selon la revendication 11, **caractérisé en ce**
- **que** ledit piston de manoeuvre (28) présente plusieurs zones gonflées (38, 40, 42) aux moyens d'étanchéité (44, 46, 48) d'une telle manière, que des zones autour ledit piston de manoeuvre (28) se puissent étancher contre une paroi de carter (50) de ladite vanne à 3/3 voies (18),
- **qu'**une ouverture d'alimentation (52), une ouverture de travail (54) et une ouverture de purge d'air (56) sont formées dans une paroi de carter (50) de ladite vanne à 3/3 voies (18),
- **qu'**à ladite première position de fin de course, ladite ouverture de travail (54) est reliée à ladite ouverture de purge d'air (56),
- **qu'**à ladite deuxième position de fin de course, ladite ouverture de travail (54) est reliée à ladite ouverture d'alimentation (52), et
- **qu'**à ladite position intermédiaire, ladite ouverture d'alimentation (52), ladite ouverture de travail (54) et ladite ouverture de purge d'air (56) sont rendues étanche l'une relativement à l'autre.

13. Procédé selon la revendication 11 or 12, **caractérisé en ce**
- **que** ledit troisième piston pilote (26) présente une orifice (58),
- **que** ledit deuxième piston pilote (24) est guidé dans ladite orifice (58) dudit troisième piston pilote (26),
- **qu'**un mouvement dudit deuxième piston pilote (24) en une direction vers ladite première chambre de commande (30) est limité par son arrêt contre le carter (20) de ladite vanne à 3/3 voies (18), et
- **qu'**un mouvement dudit deuxième piston pilote (24) en une direction vers ladite deuxième chambre de commande (32) est limité par son arrêt contre ledit troisième piston pilote (26),
- audit troisième piston pilote (26) s'arrêtant contre le carter (20) de ladite vanne à 3/3 voies (18) avant ledit deuxième piston pilote (24) au cas d'un mouvement commun dudit deuxième piston pilote (24) et dudit troisième piston pilote (26) en une direction vers ladite première chambre de commande (30).

14. Procédé selon une quelconque des revendications 11 à 13, **caractérisé en ce**
- **que** des impulsions de pression sont utilisées à commuter entre les positions dudit piston de manoeuvre (28), et
- **qu'**au cas de l'absence des impulsions de pression, ledit piston de manoeuvre (28) reste en sa position.

15. Procédé selon une quelconque des revendications 11 to 14, **caractérisé en ce**
- **que** lesdites vannes magnétiques (14, 16) sont commandable de manière électrique, et
- **qu'**au moins un cylindre de frein à ressort (12) est apte à être relié à ladite ouverture de travail (54) d'une telle manière, que ledit moyen à soupape (10) se prête à l'emploi dans le cadre d'un système de frein de stationnement à commande électrique.

16. Procédé selon la revendication 15, **caractérisé en ce**
- **qu'**un élément actionneur électrique (68) est disposé, qui est apte à entrer en communication avec une unité électronique de commande (70) pour le système de frein de stationnement, et
- **que** ladite unité électronique de commande (70) pour le système de frein de stationnement est intégrée, au moins en partie, dans une unité électronique de commande (72) prévue à des autres fins.

17. Procédé selon la revendication 16, **caractérisé en ce que** ledit élément actionneur (68) présente trois états de réglage potentiels,
- à tous les cylindres de frein à ressort (12) concernés étant désaérés en une position de conduite,
- à tous les cylindres de frein à ressort (12) étant désaérés en une position d'arrêt, et
- à une position de contrôle, à un premier groupe (12) de cylindres de frein à ressort étant désaérés pendant qu'un deuxième groupe de cylindres de frein à ressort est aéré.

18. Procédé selon la revendication 17, **caractérisé en ce**
- **que** ledit premier groupe (12) de cylindres de frein à ressort est affecté à un véhicule tracteur d'un véhicule utilitaire, et
- **que** ledit deuxième groupe de cylindres de frein à ressort est affecté à au moins une remorque d'un véhicule utilitaire.

19. Procédé selon une quelconque des revendications 15 à 18, **caractérisé en ce que** ladite unité électronique de commande (70) pour le système de frein de stationnement est intégrée, au moins en partie, dans un ordinateur de bord, dans l'ordinateur du conducteur, dans une unité de commande pour un système de frein électronique (EBS) et/ou dans une unité de commande (72) d'un système de traitement d'air aux moyens protecteurs de circuit (EAC).
